# EUROPEAN PATENT APPLICATION

(11) **EP 4 779 667 A1**
(43) Date of publication of application: **22.07.2026**
(21) Application number: 24869730.2
(22) Date of filing: 11.05.2024
(51) Int. Cl.: H01H 9/30, H01H 9/02, H01H 1/58, H01H 73/18, H01H 71/02

(54) **CIRCUIT BREAKER, POWER CONVERTER, ENERGY STORAGE SYSTEM, AND ELECTRIC VEHICLE**

(30) Priority: 28.09.2023 CN 202322671550 U
(71) Applicant: Huawei Digital Power Technologies Co., Ltd., Shenzhen, Guangdong 518043 (CN)
(72) Inventor: RAN, Xiaoke, Shenzhen, Guangdong 518043 (CN); SUN, Jisheng, Shenzhen, Guangdong 518043 (CN); ZHANG, Xiufeng, Shenzhen, Guangdong 518043 (CN); ZHAO, Fugao, Shenzhen, Guangdong 518043 (CN); XIA, Quanfei, Shenzhen, Guangdong 518043 (CN); GONG, Yawen, Shenzhen, Guangdong 518043 (CN); GUI, Xin, Shenzhen, Guangdong 518043 (CN)
(74) Representative: Gill Jennings & Every LLP
(86) International application number: PCT/CN2024/092644
(87) International publication number: WO 2025/066162

(57) **Abstract**

This application provides a circuit breaker, a power converter, an energy storage system, and an electric vehicle. The circuit breaker includes two through-current busbars and two arc-extinguishing gate plate groups, and the two through-current busbars are arranged in a first direction. The two arc-extinguishing gate plate groups are spaced from each other in the first direction, and the two arc-extinguishing gate plate groups and the two through-current busbars are respectively arranged in a second direction. Each arc-extinguishing gate plate group includes one arc-extinguishing gate plate. In the second direction, a distance between the one arc-extinguishing gate plate and the through-current busbar is a maximum distance between the arc-extinguishing gate plate group and the through-current busbar. The one arc-extinguishing gate plate in one of the arc-extinguishing gate plate groups is connected to the one arc-extinguishing gate plate in the other arc-extinguishing gate plate group. When the circuit breaker is turned on, the two through-current busbars are connected. When the circuit breaker is turned off, end parts that are respectively of the two through-current busbars and that are close to each other in the first direction are bent toward the two arc-extinguishing gate plate groups respectively, to disconnect the two through-current busbars and form an arc. The two arc-extinguishing gate plate groups are configured to extinguish the arc. The circuit breaker has a strong breaking capability and is applicable to a power system with a high voltage.

## Description

This application claims priority to Chinese Patent Application No. 202322671550.3, filed with the China National Intellectual Property Administration on September 28, 2023 and entitled "CIRCUIT BREAKER, POWER CONVERTER, ENERGY STORAGE SYSTEM, AND ELECTRIC VEHICLE", which is incorporated herein by reference in its entirety.

### TECHNICAL FIELD

This application relates to the field of circuit breaker technologies, and in particular, to a circuit breaker, a power converter, an energy storage system, and an electric vehicle.

### BACKGROUND

A circuit breaker is an electronic component configured to conduct or cut off currents in one or more circuits. The circuit breaker usually plays a control and protection role in a power system. An arc is generated when the circuit breaker cuts off a current. Generation of the arc prolongs cutoff time of the circuit, and a high temperature of the arc easily endangers safe operation of the power system, causing casualties and great property losses. In a process of using the circuit breaker, the arc needs to be cooled, to reduce harm caused by the arc. However, in the conventional technology, effect of cooling the arc is poor, and it is difficult to use the circuit breaker in a power system with a high voltage.

### SUMMARY

This application provides a circuit breaker, a power converter, an energy storage system, and an electric vehicle.

According to a first aspect, this application provides a circuit breaker. The circuit breaker includes two through-current busbars and two arc-extinguishing gate plate groups, and the two through-current busbars are arranged in a first direction. The two arc-extinguishing gate plate groups are spaced from each other in the first direction. The two arc-extinguishing gate plate groups and the two through-current busbars are respectively arranged in a second direction. The second direction is perpendicular to the first direction. Each arc-extinguishing gate plate group includes a plurality of arc-extinguishing gate plates. Each arc-extinguishing gate plate group includes one arc-extinguishing gate plate. In the second direction, a distance between the one arc-extinguishing gate plate and the through-current busbar is a maximum distance between the arc-extinguishing gate plate group and the through-current busbar. The one arc-extinguishing gate plate in one of the arc-extinguishing gate plate groups is connected to the one arc-extinguishing gate plate in the other arc-extinguishing gate plate group. When the circuit breaker is turned on, the two through-current busbars are connected. When the circuit breaker is turned off, end parts that are respectively of the two through-current busbars and that are close to each other in the first direction are bent toward the two arc-extinguishing gate plate groups respectively, to disconnect the two through-current busbars and form an arc. The two arc-extinguishing gate plate groups are configured to extinguish the arc.

In this embodiment of this application, the two arc-extinguishing gate plate groups are disposed, and the two end parts are bent to be close to the two arc-extinguishing gate plate groups respectively when the circuit breaker is turned off, so that the arc generated when the two end parts are disconnected can enter the two arc-extinguishing gate plate groups. This facilitates quick cooling and extinguishing of the arc, to improve a breaking capability of the circuit breaker. In addition, the circuit breaker includes the two arc-extinguishing gate plate groups, and the two arc-extinguishing gate plate groups have stronger arc-extinguishing capabilities. Therefore, the circuit breaker is applicable to an alternating current or direct current power system with a high voltage. In addition, two arc-extinguishing gate plates that are respectively in the two arc-extinguishing gate plate groups and that are farthest away from the through-current busbar are connected. An arc entering one arc-extinguishing gate plate group may also enter the other arc-extinguishing gate plate group through the two arc-extinguishing gate plates that are farthest away from the through-current busbar, and a movement path of the arc is longer. This improves arc-extinguishing effect of the arc-extinguishing gate plate group.

In a possible implementation, the circuit breaker further includes an arc-shaped convex part, and the arc-shaped convex part is configured to connect to the one arc-extinguishing gate plate in each of the two arc-extinguishing gate plate groups. In the first direction, a projection of the arc-shaped convex part and projections of the two arc-extinguishing gate plate groups at least partially overlap. In the second direction, a distance between the arc-shaped convex part and the through-current busbar is less than a distance between the one arc-extinguishing gate plate and the through-current busbar. Two ends of the arc-shaped convex part in the first direction are respectively configured to connect to the two arc-extinguishing gate plates that are respectively in the two arc-extinguishing gate plate groups and that are farthest away from the through-current busbar. The arc-shaped convex part is disposed, so that the arc generated when the two end parts are disconnected may be divided into two arc segments by the arc-shaped convex part. The two arc segments respectively enter the two arc-extinguishing gate plate groups to be extinguished. This helps quickly cool and extinguish the arc, to improve the breaking capability of the circuit breaker. This also improves an arc-extinguishing capability of the circuit breaker, and the circuit breaker can implement arc-extinguishing at a high voltage.

In a possible implementation, when the circuit breaker is turned off, a distance between the end part and the arc-shaped convex part is greater than or equal to half of a distance between the two end parts, and is less than or equal to twice the distance between the two end parts. The distance between the end part and the arc-shaped convex part is controlled within a proper range. This helps the arc-shaped convex part divide the generated arc into two arc segments. The two arc segments respectively enter the two arc-extinguishing gate plate groups to be extinguished. This helps quickly cool and extinguish the arc, to improve the breaking capability of the circuit breaker.

In a possible implementation, each through-current busbar includes a conducting portion and a bending portion that are connected. Two bending portions of the two through-current busbars are located between two conducting portions, and the end part is an end that is of the bending portion and that is away from the conducting portion. When the circuit breaker is turned on, in the second direction, a thickness of a joint between the two bending portions is less than a thickness of the bending portion, and a thickness of a joint between the bending portion and the conducting portion is less than a thickness of the conducting portion. When the circuit breaker is turned off, the bending portion is bent relative to the conducting portion, to separate the end parts of the two bending portions from each other.

In this embodiment of this application, a thickness of a joint between the two end parts is small, so that the two bending portions can be easily disconnected, and the circuit breaker can be quickly turned off. When the circuit breaker is turned off, the bending portion is easily bent relative to the conducting portion, so that the end parts of the two bending portions are close to the arc-extinguishing gate plate group, and the arc-extinguishing gate plate group extinguishes the arc generated when the two end parts are disconnected.

In a possible implementation, in the first direction, a distance between the two conducting portions is less than or equal to a distance between the two arc-extinguishing gate plate groups. The distance between the two arc-extinguishing gate plate groups is large, so that the arc is cooled and extinguished in the two arc-extinguishing gate plate groups, and the arc-extinguishing gate plate is prevented from being damaged due to an excessive impact force of a piston when the circuit breaker is turned off. This improves utilization of the two arc-extinguishing gate plate groups.

In a possible implementation, when the circuit breaker is turned on, in the first direction, a sum of lengths of the two bending portions is greater than or equal to the distance between the two conducting portions. The lengths of the two bending portions are large, so that the two conducting portions are connected via the two bending portions when the circuit breaker is turned on.

In a possible implementation, the circuit breaker further includes two arc guiding plates. The two arc guiding plates are arranged in the first direction, and the two arc guiding plates are respectively located between one of the through-current busbars and one of the arc-extinguishing gate plate groups, and between the other one of the through-current busbars and the other one of the arc-extinguishing gate plate groups. The two arc guiding plates are respectively connected to the two conducting portions, and when the circuit breaker is turned off, the two end parts respectively abut against ends that are respectively of the two arc guiding plates and that are close to each other.

In this embodiment of this application, the arc guiding plate is connected to the conducting portion, so that the arc guiding plate and the conducting portion can be disposed in an equipotential manner. When the circuit breaker is turned off, the two end parts respectively abut against the two arc guiding plates, so that the arc generated when the two end parts are disconnected may be divided into two arc segments by the two arc guiding plates. Because the arc guiding plates and the conducting portions are equipotential, the arc is easily to be guided into the arc guiding plate. The two arc segments respectively enter the two arc-extinguishing gate plate groups to be extinguished. This facilitates quick cooling and extinguishing of the arc, to improve the breaking capability of the circuit breaker. Because an arc-extinguishing capability of the circuit breaker is enhanced, the circuit breaker can implement arc-extinguishing at a high voltage.

In a possible implementation, each arc guiding plate includes a main body part and an arc guiding segment that are connected and intersect. Two arc guiding segments of the two arc guiding plates are located between two main body parts, the main body part is connected to the conducting portion, and the arc guiding segment is bent from the main body part toward a direction away from the through-current busbar. A distance between the main body part and the conducting portion in the second direction is less than a length of the bending portion, and when the circuit breaker is turned off, the end part of the bending portion abuts against the arc guiding segment. The distance between the main body part and the conducting portion in the second direction is small. The arc guiding segment is disposed, so that when the circuit breaker is turned off, the end part of the bending portion can be smoothly in contact with the arc guiding segment, and the arc is easily guided into the arc guiding plate.

In a possible implementation, in the first direction, a projection of the arc guiding segment and a projection of the arc-extinguishing gate plate group at least partially overlap. When the circuit breaker is turned off, in the first direction, the projection of the arc guiding segment and a projection of the bending portion at least partially overlap, and the projection of the arc-extinguishing gate plate group and the projection of the bending portion at least partially overlap.

In this embodiment of this application, the arc guiding segment that is bent toward the arc-extinguishing gate plate group is disposed, so that a distance between the main body part and the conducting portion is small, and the end part can abut against the arc guiding segment. This helps reduce a size of the circuit breaker in the second direction. In addition, the arc guiding plate is disposed, so that more arc-extinguishing gate plates can be arranged by fully using space between the end part and the conducting portion. This helps extinguish the arc. The arc is guided into the arc guiding plate, and the main body part of the arc guiding plate is located between a first arc-extinguishing gate plate and the conducting portion. In this way, the arc can also be guided into the first arc-extinguishing gate plate when a distance between the arc-extinguishing gate plate group and the main body part is short, to achieve better arc-extinguishing effect. In this application, the conducting portion, the arc guiding plate, and the arc-extinguishing gate plate group are arranged compactly. This not only helps reduce the size of the circuit breaker in the second direction, but also enables more arc-extinguishing gate plates to be disposed in small space, so that the circuit breaker can implement alternating current or direct current arc-extinguishing at a high voltage.

In a possible implementation, the circuit breaker further includes an ignition element and the piston, and the ignition element, the piston, the two through-current busbars, and the two arc-extinguishing gate plate groups are arranged in the second direction. The ignition element is configured to generate a driving force driving the piston to move in the second direction, and the piston is configured to move in the second direction to disconnect the two through-current busbars to turn off the circuit breaker. The circuit breaker that uses energy generated by explosion of an ignition apparatus to disconnect the through-current busbars can respond quickly, and can quickly disconnect a fault current when the power system is faulty.

In a possible implementation, in the first direction, a width of the piston is less than or equal to the distance between the two conducting portions. When the circuit breaker is turned off, at least a part of the piston is located between the two bending portions in the first direction. A size of the piston is small, so that a movement distance of the piston in the second direction is large, a bending degree of the bending portion is greater, and the bending portion is closer to the arc-extinguishing gate plate group, so that the arc-extinguishing gate plate group extinguishes the arc generated when the two end parts are disconnected.

In a possible implementation, the circuit breaker further includes an arc-extinguishing chamber housing. The two arc-extinguishing gate plate groups and at least a part of the two through-current busbars are accommodated in the arc-extinguishing chamber housing, and the arc-extinguishing chamber housing includes two side panels disposed opposite to each other in the first direction. The side panel includes a through hole that penetrates the side panel in the first direction. The arc-extinguishing gate plate is parallel to the first direction, the plurality of arc-extinguishing gate plates are spaced from each other in the second direction, and the through hole communicates with a gap between two adjacent arc-extinguishing gate plates in the arc-extinguishing gate plate group.

When the circuit breaker is turned off, high-temperature and high-voltage gas generated by the arc may flow to the side panel through the gap between two adjacent arc-extinguishing gate plates in the arc-extinguishing gate plate group, and be discharged from the through hole on the side panel to the outside of the arc-extinguishing chamber housing. When a fault current is disconnected, arrangement of the through hole helps the arc quickly enter the arc-extinguishing gate plate group and cool a high-temperature airflow generated by the arc.

In a possible implementation, the arc-extinguishing gate plate intersects the first direction, and the plurality of arc-extinguishing gate plates are spaced from each other in a direction perpendicular to the arc-extinguishing gate plate. The through hole communicates with a gap between two adjacent arc-extinguishing gate plates in the arc-extinguishing gate plate group. The arc-extinguishing gate plate is disposed obliquely, to facilitate discharge of the high-temperature airflow generated by the arc.

According to a second aspect, this application provides a power converter. A direct current input end of the power converter is configured to connect to a photovoltaic module or an energy storage battery, and an alternating current output end of the power converter is configured to connect to a power grid or a load. The power converter includes a DC/AC conversion circuit, a controller, and the foregoing circuit breaker. The circuit breaker is connected between the direct current input end and the DC/AC conversion circuit, or the circuit breaker is connected between the DC/AC conversion circuit and the alternating current output end. When a current flowing through two through-current busbars of the circuit breaker is greater than a preset threshold, the two through-current busbars are disconnected.

According to a third aspect, this application provides an energy storage system. The energy storage system includes a controller, a plurality of battery packs connected in series, and the foregoing circuit breaker, and the circuit breaker is connected to a series loop of the plurality of battery packs. When a current flowing through two through-current busbars of the circuit breaker is greater than a preset threshold, the two through-current busbars are disconnected.

According to a fourth aspect, this application provides an electric vehicle. The electric vehicle includes a controller battery cluster, an inverter circuit, a motor, and the foregoing circuit breaker. The battery cluster is configured to output a direct current, and the inverter circuit converts the direct current into a three-phase alternating current and transmits the three-phase alternating current to the motor. The circuit breaker is connected between the battery cluster and a direct current terminal of the inverter circuit, or the circuit breaker is connected between an alternating current terminal of the inverter circuit and the motor. When a current flowing through two through-current busbars of the circuit breaker is greater than a preset threshold, the two through-current busbars are disconnected.

### BRIEF DESCRIPTION OF DRAWINGS

To describe technical solutions in embodiments of this application more clearly, the following describes accompanying drawings used in embodiments of this application.
FIG. 1 is a diagram of a photovoltaic energy storage system according to an embodiment of this application;
FIG. 2 is a diagram of an energy storage system according to an embodiment of this application;
FIG. 3 is a diagram of a vehicle energy storage system according to an embodiment of this application;
FIG. 4 is a sectional view of a circuit breaker in a turned-on state according to an embodiment of this application;
FIG. 5 is a sectional view of a circuit breaker in a turned-off state according to an embodiment of this application;
FIG. 6 is a diagram of a through-current busbar according to an embodiment of this application;
FIG. 7 is a partial exploded view of a circuit breaker according to an embodiment of this application;
FIG. 8 is a partial exploded view of a circuit breaker according to an embodiment of this application;
FIG. 9 is a partial three-dimensional diagram of a circuit breaker according to an embodiment of this application;
FIG. 10 is a partial exploded view of a circuit breaker according to an embodiment of this application;
FIG. 11 is a partial diagram of a circuit breaker according to an embodiment of this application; and
FIG. 12 is a three-dimensional diagram of a circuit breaker according to an embodiment of this application.

### DESCRIPTION OF EMBODIMENTS

The following describes technical solutions in embodiments of this application with reference to accompanying drawings in embodiments of this application. It is clear that the described embodiments are merely some rather than all of embodiments of this application.

Terms "first", "second", and the like in this specification are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of this application, unless otherwise stated, "a plurality of" means two or more than two.

In addition, in this specification, position terms such as "top" and "bottom" are defined relative to positions of structures in the accompanying drawings. It should be understood that these position terms are relative concepts used for relative description and clarification, and may correspondingly change according to changes in the positions of the structures.

For ease of understanding, the following first explains and describes English abbreviations and related technical terms in embodiments of this application.

DC: is a direct current, namely, the direct current. DC/DC indicates that a direct current is converted into a direct current, that is, the direct current is input and the direct current is output.

AC: is an alternating current, namely, the alternating current. DC/AC indicates that a direct current is converted into an alternating current or an alternating current is converted into a direct current.

A circuit breaker in this application may be effectively used in a power system with a high-voltage circuit. The power system may include a high-voltage power supply and a load. One end of the circuit breaker is connected to the high-voltage power supply, and the other end is connected to the load. In addition, the circuit breaker in this application may alternatively be used in a power system with a low-voltage circuit or power equipment.

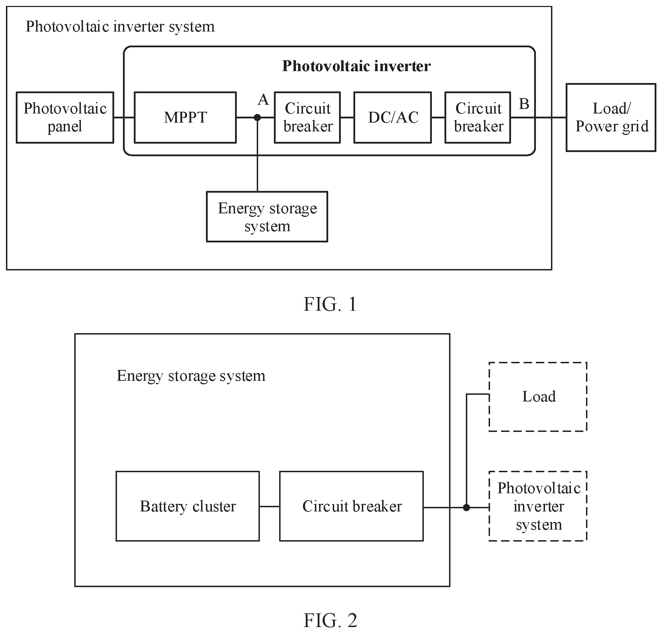

For example, the power system may include a photovoltaic energy storage system. FIG. 1 is a diagram of a photovoltaic energy storage system according to an embodiment of this application. As shown in FIG. 1, the photovoltaic energy storage system includes a photovoltaic (photovoltaic, PV) panel and a photovoltaic inverter. The photovoltaic inverter is a power converter provided in this application. The photovoltaic panel converts solar energy into electric energy. Because the photovoltaic panel generates a direct current, the direct current needs to be converted into an alternating current via the photovoltaic inverter, to facilitate power transmission and utilization.

A direct current input end of the photovoltaic inverter is configured to connect to the photovoltaic panel. The photovoltaic inverter includes a direct current to alternating current (direct current to alternating current, DC/AC) conversion circuit, and the DC/AC conversion circuit is configured to convert a direct current into an alternating current.

In an implementation, the photovoltaic inverter further includes a maximum power point tracking (maximum power point tracking, MPPT) module. The MPPT module is configured to track a maximum voltage/current value, so that a power generation system outputs a current at maximum power.

The MPPT module and a DC/DC circuit in the photovoltaic inverter may be disposed in a same package device, or may be disposed in different package devices. In an implementation, the photovoltaic inverter may alternatively include no MPPT module.

The MPPT module may include a direct current to direct current (direct current to direct current, DC/DC) conversion circuit. The DC/DC conversion circuit is configured to perform voltage regulation processing (or voltage conversion processing) on a direct current generated by a PV module. A regulated direct current may be output to a power energy storage system. One end A of the DC/AC conversion circuit is connected to the MPPT module and an energy storage system, and the other end B is configured to connect to a power grid or a load, so that the DC/AC conversion circuit converts a direct current output by the MPPT module or the energy storage system into an alternating current, and supplies the alternating current to the load or the power grid through an alternating current output end of the photovoltaic inverter.

In addition, the other end B of the DC/AC conversion circuit may be further connected to another energy storage system via the inverter (namely, a DC/AC converter). The inverter is configured to convert an alternating current from the photovoltaic inverter into a direct current, and store the direct current in the energy storage system. In addition, a direct current from the energy storage system may be converted into an alternating current, and the alternating current is supplied to the load or the power grid.

As shown in FIG. 1, in an implementation, the circuit breaker provided in this application may be disposed in a circuit between the DC/AC conversion circuit and both the MPPT and the energy storage system. One through-current busbar of the circuit breaker is connected to the MPPT and the energy storage system, and the other through-current busbar of the circuit breaker is connected to the DC/AC conversion circuit. Specifically, when the circuit breaker is located in the photovoltaic inverter, the circuit breaker is connected between the direct current input end of the photovoltaic inverter and the DC/AC conversion circuit. In this case, the circuit breaker operates in a direct current circuit. When a current flowing through the two through-current busbars of the circuit breaker is greater than a preset threshold, the two through-current busbars are disconnected, to cut off an electrical connection between the MPPT and the DC/AC conversion circuit and cut off an electrical connection between the energy storage system and the DC/AC conversion circuit.

In another implementation, the circuit breaker provided in this application may be disposed between the DC/AC conversion circuit and an output interface of a photovoltaic system. The circuit breaker may cut off an electrical connection between the DC/AC conversion circuit and the alternating current load or the power grid, that is, one through-current busbar of the circuit breaker is connected to the DC/AC conversion circuit, and the other through-current busbar of the circuit breaker is connected to the power grid or the load. Specifically, when the circuit breaker is located in the photovoltaic inverter, the circuit breaker is connected between the DC/AC conversion circuit and the alternating current output end of the photovoltaic inverter. In this case, the circuit breaker operates in an alternating current circuit. When a current flowing through the two through-current busbars of the circuit breaker is greater than a preset threshold, the two through-current busbars are disconnected, to cut off an electrical connection between the photovoltaic system and the load or the power grid.

For example, the power system may include an energy storage system. FIG. 2 is a diagram of an energy storage system according to an embodiment of this application. As shown in FIG. 2, the energy storage system includes one or more battery clusters, each battery cluster includes a plurality of battery packs, and the plurality of battery packs are connected in series. The circuit breaker is connected to a series loop of the plurality of battery packs. In an implementation, the battery cluster includes an input/output interface. The input/output interface is configured to output a direct current to the load or a photovoltaic inverter system, and the input/output interface is configured to input a direct current output from the photovoltaic inverter system. The circuit breaker provided in this application may be disposed between the input/output interface (or an output bus of the battery cluster), and both the photovoltaic system and the load. In this case, the circuit breaker operates in a direct current circuit. When a current flowing through the two through-current busbars of the circuit breaker is greater than a preset threshold, the two through-current busbars are disconnected, to cut off an electrical connection between the energy storage system and a direct current load or the photovoltaic inverter system.

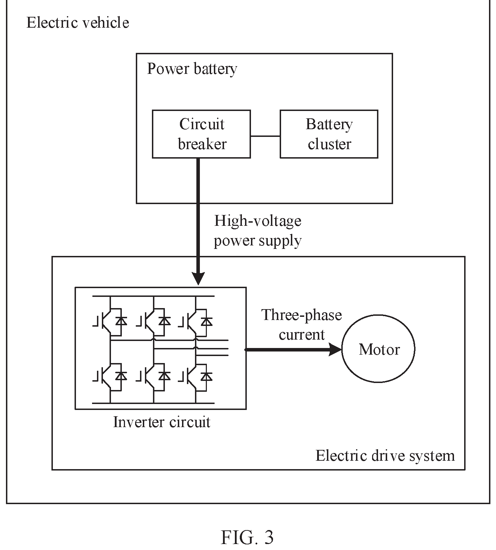

For example, the power system may include a power system in an electric vehicle. FIG. 3 is a diagram of a vehicle energy storage system according to an embodiment of this application. As shown in FIG. 3, the electric vehicle includes a power battery and an electric drive system. The power battery includes a battery cluster, and the battery cluster is configured to output a direct current. The battery cluster includes one or more battery packs connected in series. The electric drive system includes an inverter circuit and a motor. The output port of the battery cluster provides a direct current for the inverter circuit, and the inverter circuit converts the direct current into a three-phase alternating current and transmits the three-phase alternating current to the motor, to drive the motor.

In an implementation, the circuit breaker provided in this application may be disposed in a circuit between the battery cluster and the inverter circuit. To be specific, one through-current busbar of the circuit breaker is connected to the battery cluster, and the other through-current busbar of the circuit breaker is connected to a direct current bus of the inverter circuit. In this case, the circuit breaker operates in the direct current circuit. When a current flowing through the two through-current busbars of the circuit breaker is greater than a preset threshold, the two through-current busbars are disconnected, to cut off an electrical connection between the battery cluster and the electric drive system.

In another implementation, the circuit breaker provided in this application may be disposed in a circuit between the inverter circuit and the motor. To be specific, the circuit breaker may cut off an electrical connection between the inverter circuit and the motor. In other words, one through-current busbar of the circuit breaker is connected to an alternating current bus of the inverter circuit, and the other through-current busbar of the circuit breaker is connected to the motor. In this case, the circuit breaker operates in the alternating current circuit. When a current flowing through the two through-current busbars of the circuit breaker is greater than a preset threshold, the two through-current busbars are disconnected, to cut off the electrical connection between the inverter circuit and the motor.

The circuit breaker provided in this application is further applicable to another power system in which a fault current needs to be quickly disconnected.

In addition, although not shown in the figure, the power converter, the energy storage system, and the electric vehicle provided in this application may further include a controller. When the current flowing through the circuit breaker is greater than the preset threshold, the controller can disconnect the two through-current busbars of the circuit breaker, to disconnect a fault current.

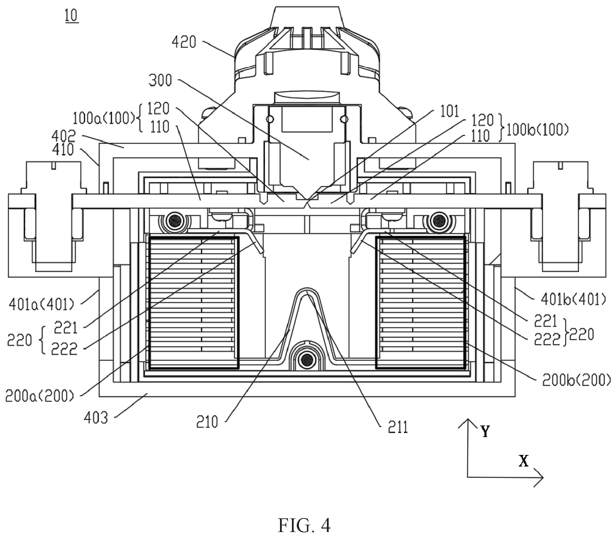

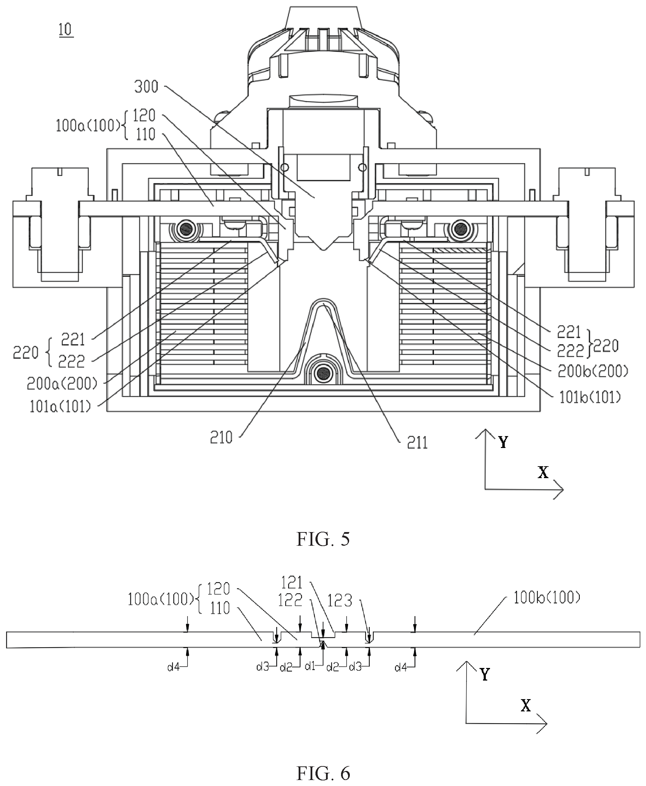

Refer to FIG. 4 and FIG. 5. FIG. 4 is a sectional view of a circuit breaker 10 in a turned-on state according to an embodiment of this application. FIG. 5 is a sectional view of the circuit breaker 10 in a turned-off state according to an embodiment of this application. The circuit breaker 10 includes two through-current busbars 100 and two arc-extinguishing gate plate groups 200. The two through-current busbars 100 are arranged in a first direction X, and the two arc-extinguishing gate plate groups 200 are spaced from each other in the first direction X. The two arc-extinguishing gate plate groups 200 and the two through-current busbars 100 are respectively arranged in a second direction Y. Each arc-extinguishing gate plate group 200 includes a plurality of arc-extinguishing gate plates, and the second direction Y is perpendicular to the first direction X. When the circuit breaker 10 is turned on, the two through-current busbars 100 are connected (as shown in FIG. 4). When the circuit breaker 10 is turned off, end parts 101 that are respectively of the two through-current busbars 100 and that are close to each other in the first direction X are bent toward the two arc-extinguishing gate plate groups 200 respectively (as shown in FIG. 5), to disconnect the two through-current busbars 100 and form an arc. The two arc-extinguishing gate plate groups 200 are configured to extinguish the arc.

The two through-current busbars 100 may be respectively denoted as a through-current busbar 100a and a through-current busbar 100b, and the end parts 101 that are respectively of the through-current busbar 100a and the through-current busbar 100b and that are close to each other in the first direction X are respectively denoted as an end part 101a and an end part 101b.

Refer to FIG. 4. When the circuit breaker 10 is turned on, the two end parts 101 are connected, so that the through-current busbar 100a is connected to the through-current busbar 100b. When the circuit breaker 10 is connected between a power conversion unit and a direct current source, the power conversion unit and the direct current source are connected via the through-current busbar 100a and the through-current busbar 100b. When the circuit breaker 10 is connected between the power conversion unit and a load, the power conversion unit and the load are connected via the through-current busbar 100a and the through-current busbar 100b. In an implementation, the two through-current busbars 100 are of an integrated structure. The two through-current busbars 100 are integrally formed. This improves reliability of connection between the two through-current busbars 100 when the circuit breaker 10 is turned on.

Refer to FIG. 5. When the circuit breaker 10 is turned off, the end part 101a and the end part 101b are separated from each other, so that the through-current busbar 100a is disconnected from the through-current busbar 100b, and a current between the through-current busbar 100a and the through-current busbar 100b is cut off. In this case, the power conversion unit is disconnected from the direct current source via the through-current busbar 100a and the through-current busbar 100b, or the power conversion unit is disconnected from the load via the through-current busbar 100a and the through-current busbar 100b. For example, when the circuit breaker 10 is used in a power converter and connected between a direct current input end and a DC/AC conversion circuit, the direct current source is the direct current input end, the power conversion unit is the DC/AC conversion circuit, and the direct current input end is disconnected from the DC/AC conversion circuit via the circuit breaker 10.

In a process in which the end part 101a is separated from the end part 101b, gas with a high temperature, strong light emission, and strong conductivity, that is, an arc, is generated between the end part 101a and the end part 101b. The arc is a gas discharge phenomenon, and the arc is light and easy to change in form. Generation of the arc prolongs cutoff time of a circuit. If a circuit of a power system is faulty, the circuit breaker 10 needs to be turned off. Due to generation of the arc, the circuit breaker 10 cannot be turned off in time, resulting in greater damage to the power system. In addition, the high temperature of the arc easily causes accidents such as explosion of the circuit breaker 10 and burns of a person, and strong light of the arc may also damage eyesight of a person. In addition, conductivity of the arc easily causes a short circuit of another device, endangers safe operation of the power system, and causes casualties and great property losses.

In this embodiment of this application, the two arc-extinguishing gate plate groups 200 are disposed, and each arc-extinguishing gate plate group 200 includes an arc-extinguishing gate plate in a dashed-line box in FIG. 4. An arc generated when the two end parts 101 are disconnected can enter the two arc-extinguishing gate plate groups 200 to be extinguished under action of a magnetic field and an airflow of the arc. The two arc-extinguishing gate plate groups 200 are located on a same side of the through-current busbar 100. The two arc-extinguishing gate plate groups 200 are respectively denoted as an arc-extinguishing gate plate group 200a and an arc-extinguishing gate plate group 200b. The arc-extinguishing gate plate group 200a and the through-current busbar 100a are arranged in the second direction Y, and the arc-extinguishing gate plate group 200b and the through-current busbar 100b are arranged in the second direction Y. In an implementation, in the second direction Y, a projection of the arc-extinguishing gate plate group 200a does not overlap a projection of the through-current busbar 100b, and a projection of the arc-extinguishing gate plate group 200b does not overlap a projection of the through-current busbar 100a.

Refer to FIG. 4 and FIG. 5. In an implementation, each arc-extinguishing gate plate group 200 includes one arc-extinguishing gate plate. In the second direction Y, a distance between the one arc-extinguishing gate plate and the through-current busbar 100 is a maximum distance between the arc-extinguishing gate plate group 200 and the through-current busbar 100. The one arc-extinguishing gate plate in one of the arc-extinguishing gate plate groups 200 is connected to the one arc-extinguishing gate plate in the other arc-extinguishing gate plate group 200. As shown in FIG. 4, each arc-extinguishing gate plate group 200 includes a plurality of arc-extinguishing gate plates spaced from each other, and the one arc-extinguishing gate plate is an arc-extinguishing gate plate that is in each arc-extinguishing gate plate group 200 and that is farthest away from the through-current busbar 100.

In this embodiment of this application, two arc-extinguishing gate plates that are respectively in the two arc-extinguishing gate plate groups 200 and that are farthest away from the through-current busbar 100 are connected. An arc entering the arc-extinguishing gate plate group 200a may also enter the arc-extinguishing gate plate group 200b through the two arc-extinguishing gate plates that are farthest away from the through-current busbar 100. An arc entering the arc-extinguishing gate plate group 200b may also enter the arc-extinguishing gate plate group 200a through the two arc-extinguishing gate plates that are farthest away from the through-current busbar 100. A movement path of the arc is longer. This improves arc-extinguishing effect of the arc-extinguishing gate plate group 200.

Refer to FIG. 4 and FIG. 5. In an implementation, the circuit breaker 10 further includes an arc-shaped convex part 210, and the arc-shaped convex part 210 is configured to connect to the one arc-extinguishing gate plate in each of the two arc-extinguishing gate plate groups 200. In the first direction, a projection of the arc-shaped convex part 210 and projections of the two arc-extinguishing gate plate groups 200 at least partially overlap. In the second direction Y, a distance between the arc-shaped convex part 210 and the through-current busbar 100 is less than the distance between the one arc-extinguishing gate plate and the through-current busbar 100. Two ends of the arc-shaped convex part 210 in the first direction X are respectively configured to connect to the two arc-extinguishing gate plates that are respectively in the two arc-extinguishing gate plate groups 200 and that are farthest away from the through-current busbar 100. In the first direction X, the arc-shaped convex part 210 is located in a gap between the two arc-extinguishing gate plate groups 200. The arc-shaped convex part 210 protrudes, toward the through-current busbar 100, from the two arc-extinguishing gate plates that are respectively in the two arc-extinguishing gate plate groups 200 and that are farthest away from the through-current busbar 100, so that the distance between the arc-shaped convex part 210 and the through-current busbar 100 is small. The distance between the arc-shaped convex part 210 and the through-current busbar 100 is a minimum distance between the arc-shaped convex part 210 and the through-current busbar 100 in the second direction Y, and is also a distance between a tip 211 of the arc-shaped convex part 210 and the through-current busbar 100 in the second direction Y.

In this embodiment of this application, the arc-shaped convex part 210 is disposed, so that the arc generated when the two end parts 101 are disconnected may be divided into two arc segments by the arc-shaped convex part 210. The two arc segments respectively enter the two arc-extinguishing gate plate groups 200 to be extinguished. This helps quickly cool and extinguish the arc, to improve a breaking capability of the circuit breaker 10. This also improves an arc-extinguishing capability of the circuit breaker 10, and the circuit breaker 10 can implement arc-extinguishing at a high voltage.

In an implementation, in the second direction Y, the tip 211 of the arc-shaped convex part 210 directly faces a joint between two bending portions 120. Because an impact force generated by ignition of an ignition element is in the second direction Y, and the tip 211 of the arc-shaped convex part 210 directly faces the joint between the two bending portions 120, so that the arc can quickly be in contact with the arc-shaped convex part 210 under action of an airflow in the second direction Y, and the arc can be cooled and extinguished more quickly. This improves the breaking capability of the circuit breaker 10.

In an implementation, when the circuit breaker 10 is turned off, a distance between the end part 101 and the arc-shaped convex part 210 is greater than or equal to half of a distance between the two end parts 101, and is less than or equal to twice the distance between the two end parts 101. The distance between the end part 101 and the arc-shaped convex part 210 is a straight-line distance between the end part 101 and the tip 211 of the arc-shaped convex part 210. The distance between the end part 101 and the arc-shaped convex part 210 is controlled within a proper range. This helps the arc-shaped convex part 210 divide a generated arc into two arc segments. The two arc segments respectively enter the two arc-extinguishing gate plate groups 200 to be extinguished. This helps quickly cool and extinguish the arc, to improve the breaking capability of the circuit breaker 10.

In an implementation, when the circuit breaker 10 is turned off, a distance between each of the two end parts 101 and the arc-shaped convex part 210 is equal to the distance between the two end parts 101. This helps quickly cool and extinguish the arc.

Refer to FIG. 5. When the circuit breaker 10 is turned off, the end part 101a is bent toward the arc-extinguishing gate plate group 200a, the end part 101b is bent toward the arc-extinguishing gate plate group 200b, and the end part 101a and the end part 101b extend into the gap between the two arc-extinguishing gate plate groups 200. The two end parts 101 move close to the two arc-extinguishing gate plate groups 200 respectively, and a distance between each of the two end parts 101 and each of the two arc-extinguishing gate plate groups 200 is reduced, so that the arc generated when the two end parts 101 are disconnected is extinguished.

In this embodiment of this application, the two arc-extinguishing gate plate groups 200 are disposed, and the two end parts 101 are bent to be close to the two arc-extinguishing gate plate groups 200 respectively when the circuit breaker 10 is turned off, so that the arc generated when the two end parts 101 are disconnected can enter the two arc-extinguishing gate plate groups 200. This facilitates quick cooling and extinguishing of the arc, to improve the breaking capability of the circuit breaker 10. In addition, the circuit breaker 10 includes the two arc-extinguishing gate plate groups 200, and the two arc-extinguishing gate plate groups 200 have stronger arc-extinguishing capabilities. Therefore, the circuit breaker 10 is applicable to an alternating current or direct current power system with a high voltage.

Refer to FIG. 4 and FIG. 5. In an implementation, the circuit breaker 10 further includes the ignition element and a piston 300. The ignition element, the piston 300, the two through-current busbars 100, and the two arc-extinguishing gate plate groups 200 are arranged in the second direction Y. The ignition element is configured to generate a driving force driving the piston 300 to move in the second direction Y, and the piston 300 is configured to move in the second direction Y to disconnect the two through-current busbars 100 to turn off the circuit breaker 10. The ignition element may be an ignition apparatus. The ignition apparatus ignites and explodes when receiving an ignition signal sent by a controller, and an impact force generated by the explosion drives the piston 300 to move. The circuit breaker 10 is a smoke and fire type power-off protection circuit breaker.

In this embodiment of this application, the circuit breaker 10 that uses energy generated by explosion of the ignition apparatus to disconnect the through-current busbars 100 can respond quickly, and can quickly disconnect a fault current when the power system is faulty.

In an implementation, in the first direction X, the piston 300 includes a tip part and a rod part that are connected in the second direction Y. When the circuit breaker 10 is turned on, in the second direction Y, the rod part, the tip part, and the two through-current busbars 100 are sequentially arranged. A size of the tip part in the first direction X gradually increases in a direction from the through-current busbar 100 to the rod part in the second direction Y. When the circuit breaker 10 is turned on, in the second direction Y, a tip of the tip part directly faces a joint between the two through-current busbars 100, so that the piston 300 can quickly disconnect the two through-current busbars 100 when the circuit breaker 10 is turned off.

Refer to FIG. 4 and FIG. 5. In an implementation, each through-current busbar 100 includes a conducting portion 110 and the bending portion 120 that are connected, and two bending portions 120 of the two through-current busbars 100 are located between two conducting portions 110. The end part 101 is an end that is of the bending portion 120 and that is away from the conducting portion 110. One of the two conducting portions 110 is configured to connect to the power conversion unit, for example, a DC/AC conversion circuit or an inverter circuit. The other one of the two conducting portions 110 is configured to connect to a direct current source, a load, or a power grid. The direct current source may be a battery pack, a battery cluster, or a photovoltaic panel, and the load may be a power-consuming device.

When the circuit breaker 10 is turned on, the conducting portion 110 of the through-current busbar 100a, the bending portion 120 of the through-current busbar 100a, the bending portion 120 of the through-current busbar 100b, and the conducting portion 110 of the through-current busbar 100b are sequentially arranged and connected in the first direction X. When the circuit breaker 10 is turned off, the bending portion 120 of the through-current busbar 100a can be bent, toward the arc-extinguishing gate plate group 200a, around a connection point between the conducting portion 110 and the bending portion 120 of the through-current busbar 100a. Similarly, the bending portion 120 of the through-current busbar 100b can be bent, toward the arc-extinguishing gate plate group 200b, around a connection point between the conducting portion 110 and the bending portion 120 of the through-current busbar 100b. The two bending portions 120 are bent relative to the two conducting portions 110 respectively, to separate the end part 101a and the end part 101b from each other.

In an implementation, in the first direction X, a width of the piston 300 is less than or equal to a distance between the two conducting portions 110. When the circuit breaker 10 is turned off, at least a part of the piston 300 is located between the two bending portions 120 in the first direction X. When the piston 300 moves in the second direction Y, the piston 300 disconnects the two end parts 101 and pushes the bending portion 120 to move around a joint between the conducting portion 110 and the bending portion 120, so that the two bending portions 120 move toward the two arc-extinguishing gate plate groups 200 respectively. At least a part of the piston 300 is located between the two bending portions 120. A distance of movement of the piston 300 in the second direction Y is large, so that a bending degree of the bending portion 120 is large, and the bending portion 120 is close to the arc-extinguishing gate plate group 200. This helps the arc-extinguishing gate plate group 200 extinguish the arc generated when the two end parts 101 are disconnected.

In an implementation, when the circuit breaker 10 is turned off, at least a part of the rod part of the piston 300 is located between the two bending portions 120 in the first direction X.

Refer to FIG. 4 and FIG. 6. In an implementation, when the circuit breaker 10 is turned on, in the second direction Y, a thickness of the joint between the two bending portions 120 is less than a thickness of the bending portion 120. In other words, a thickness of a joint between the two end parts 101 is less than the thickness of the bending portion 120. The thickness of the bending portion 120 is a maximum thickness of the bending portion 120. As shown in FIG. 6, the thickness of the joint between the two bending portions 120 is d1, and the thickness of the bending portion 120 is d2. The thickness of the joint between the two end parts 101 is small. This facilitates breaking a connection between the two bending portions 120, and facilitates quick turning-off of the circuit breaker 10.

In an implementation, the joint between the two bending portions 120 further includes a first groove 121 and a second groove 122. A groove opening of the first groove 121 is away from the arc-extinguishing gate plate group 200. A groove opening of the second groove 122 faces the arc-extinguishing gate plate group 200 in the second direction Y. The two grooves are disposed so that the thickness of the joint between the two bending portions 120 is smaller, to facilitate disconnection of the two bending portions 120.

In an implementation, a depth of the second groove 122 is greater than a depth of the first groove 121. The groove opening of the second groove 122 is away from the piston 300, so that the two bending portions 120 are easily disconnected when the piston 300 impacts the joint between the two bending portions 120 in the second direction Y.

Refer to FIG. 4 and FIG. 6. In an implementation, when the circuit breaker 10 is turned on, in the second direction Y, a thickness of the joint between the bending portion 120 and the conducting portion 110 is less than a thickness of the conducting portion 110. The thickness of the conducting portion 110 may be a maximum thickness of the conducting portion 110. The thickness of the joint between the bending portion 120 and the conducting portion 110 is d3 in FIG. 6, and the thickness of the conducting portion 110 is d4 in FIG. 6. When the circuit breaker 10 is turned off, the bending portion 120 is easily bent relative to the conducting portion 110, so that the end parts 101 of the two bending portions 120 are close to the arc-extinguishing gate plate group 200, and the arc-extinguishing gate plate group 200 extinguishes the arc generated when the two end parts 101 are disconnected.

Refer to FIG. 4 and FIG. 6. In an implementation, the joint between the bending portion 120 and the conducting portion 110 includes a notch 123, and an opening of the notch 123 is away from the arc-extinguishing gate plate group 200 in the second direction Y. The notch 123 is disposed, so that the thickness of the joint between the bending portion 120 and the conducting portion 110 is smaller. An opening of the notch 123 faces the piston 300, so that the bending portion 120 is easily bent around the joint between the bending portion 120 and the conducting portion 110 when the piston 300 impacts the joint between the two bending portions 120 in the second direction Y and the joint between the two bending portions 120 is disconnected, to help the arc-extinguishing gate plate group 200 extinguish the arc generated when the two end parts 101 are disconnected.

Refer to FIG. 4 and FIG. 5. In an implementation, in the first direction X, the distance between the two conducting portions 110 is less than or equal to a distance between the two arc-extinguishing gate plate groups 200. The distance between the two arc-extinguishing gate plate groups 200 is large, so that the arc is cooled and extinguished in the two arc-extinguishing gate plate groups 200, and the arc-extinguishing gate plate is prevented from being damaged due to an excessive impact force of the piston 300 when the circuit breaker 10 is turned off. This improves utilization of the two arc-extinguishing gate plate groups 200.

Refer to FIG. 4 and FIG. 5. In an implementation, when the circuit breaker 10 is turned on, in the first direction X, a sum of lengths of the two bending portions 120 is greater than or equal to the distance between the two conducting portions 110. The lengths of the two bending portions 120 are large, so that the two conducting portions 110 are connected via the two bending portions 120 when the circuit breaker 10 is turned on.

Refer to FIG. 4 and FIG. 5. In an implementation, the circuit breaker 10 further includes two arc guiding plates 220. The two arc guiding plates 220 are arranged in the first direction X, and the two arc guiding plates 220 are respectively located between one of the through-current busbars 100 and one of the arc-extinguishing gate plate groups 200, and between the other one of the through-current busbars 100 and the other one of the arc-extinguishing gate plate groups 200. The two arc guiding plates 220 are respectively connected to the two conducting portions 110, and when the circuit breaker 10 is turned off, the two end parts 101 respectively abut against ends that are respectively of the two arc guiding plates 220 and that are close to each other. In the second direction Y, one of the two arc guiding plates 220 is located between the through-current busbar 100a and the arc-extinguishing gate plate group 200a, and the other one of the two arc guiding plates 220 is located between the through-current busbar 100b and the arc-extinguishing gate plate group 200b.

The two arc guiding plates 220 may be respectively fastened to the two conducting portions 110 via a bolt, a screw, a pin, a clamping piece, or the like. The arc guiding plate 220 is connected to the conducting portion 110, so that the arc guiding plate 220 and the conducting portion 110 may be disposed in an equipotential manner. When the circuit breaker 10 is turned off, the two end parts 101 respectively abut against the two arc guiding plates 220, so that the arc generated when the two end parts 101 are disconnected may be divided into two arc segments by the two arc guiding plates 220. Because the arc guiding plates 220 and the conducting portions 110 are equipotential, the arc is easily to be guided into the arc guiding plate 220. The two arc segments respectively enter the two arc-extinguishing gate plate groups 200 to be extinguished. This facilitates quick cooling and extinguishing of the arc, to improve the breaking capability of the circuit breaker 10. In addition, because an arc-extinguishing capability of the circuit breaker 10 is enhanced, the circuit breaker 10 can implement arc-extinguishing at a high voltage.

Refer to FIG. 4 and FIG. 5. In an implementation, each arc guiding plate 220 includes a main body part 221 and an arc guiding segment 222 that are connected and intersect. Two arc guiding segments 222 of the two arc guiding plates 220 are located between two main body parts 221. The main body part 221 is connected to the conducting portion 110, and the arc guiding segment 222 is bent from the main body part 221 toward a direction away from the through-current busbar 100. A distance between the main body part 221 and the conducting portion 110 in the second direction Y is less than the length of the bending portion 120. When the circuit breaker 10 is turned off, the end part 101 of the bending portion 120 abuts against the arc guiding segment 222.

The length of the bending portion 120 is a length of the bending portion 120 in the first direction X existing when the circuit breaker is turned on. The distance between the main body part 221 and the conducting portion 110 in the second direction Y is small. The arc guiding segment 222 is disposed, so that when the circuit breaker 10 is turned off, the end part 101 of the bending portion 120 can be smoothly in contact with the arc guiding segment 222, and the arc is easily guided into the arc guiding plate 220.

Refer to FIG. 4 and FIG. 5. In an implementation, in the first direction X, a projection of the arc guiding segment 222 and the projection of the arc-extinguishing gate plate group 200 at least partially overlap. When the circuit breaker 10 is turned off, in the first direction X, the projection of the arc guiding segment 222 and a projection of the bending portion 120 at least partially overlap, and the projection of the arc-extinguishing gate plate group 200 and the projection of the bending portion 120 at least partially overlap. At least a part of the bending portion 120 and at least a part of the arc guiding segment 222 extend into the gap between the two arc-extinguishing gate plate groups 200.

In this embodiment of this application, because the length of the bending portion 120 is large, when the circuit breaker 10 is turned off, if the arc guiding segment 222 is not disposed, a distance between the arc guiding plate 220 and the conducting portion 110 needs to be large, so that the end part 101 can abut against the arc guiding plate 220. However, in this application, the arc guiding segment 222 that is bent toward the arc-extinguishing gate plate group 200 is disposed, so that the end part 101 can abut against the arc guiding segment 222 even if the distance between the main body part 221 and the conducting portion 110 is small. This helps reduce a size of the circuit breaker 10 in the second direction Y.

In addition, the arc guiding plate 220 is disposed, so that more arc-extinguishing gate plates can be arranged by fully using space between the end part 101 and the conducting portion 110. This helps extinguish the arc. Generally, to prolong an arc motion path to improve arc-extinguishing effect, the arc generally enters the arc-extinguishing gate plate group from a first arc-extinguishing gate plate in the arc-extinguishing gate plate group. The first arc-extinguishing gate plate is an arc-extinguishing gate plate that is in the arc-extinguishing gate plate group and that is closest to the conducting portion 110 in the second direction Y. If the arc guiding plate 220 is not disposed, a distance between the arc-extinguishing gate plate group 200 and the conducting portion 110 in the second direction Y needs to be increased, so that the end part 101 is closest to the first arc-extinguishing gate plate when the circuit breaker is turned off. However, in this application, the arc is guided into the arc guiding plate 220, and the main body part 221 of the arc guiding plate 220 is located between the first arc-extinguishing gate plate and the conducting portion 110. In this way, the arc can also be guided into the first arc-extinguishing gate plate when a distance between the arc-extinguishing gate plate group 200 and the main body part 221 is short, to achieve better arc-extinguishing effect.

In this embodiment of this application, the conducting portion 110, the arc guiding plate 220, and the arc-extinguishing gate plate group 200 are arranged compactly. This not only helps reduce the size of the circuit breaker 10 in the second direction Y, but also enables more arc-extinguishing gate plates to be disposed in small space, so that the circuit breaker 10 can implement alternating current or direct current arc-extinguishing at a high voltage.

In an implementation, when the circuit breaker 10 is turned off, an included angle between the bending portion 120 and the first direction X is greater than an included angle between the arc guiding segment 222 and the first direction X. In the first direction X, a minimum distance between the two arc guiding segments 222 is greater than or equal to the distance between the two conducting portions 110, so that the end parts 101 of the two bending portions 120 respectively abut against the two arc guiding segments 222 when the circuit breaker 10 is turned off. The included angle between the bending portion 120 and the first direction X is a minimum angle formed between the end part 101 and the first direction X. The included angle between the arc guiding segment 222 and the first direction X is also a minimum angle formed between the arc guiding segment 222 and the first direction X. A minimum distance between the two arc guiding segments 222 is also a distance between two ends that are respectively of the two arc guiding segments 222 and that are close to each other.

Refer to FIG. 5. In an implementation, when the circuit breaker 10 is turned off, the included angle between the bending portion 120 and the first direction X is 90 degrees. To be specific, when the circuit breaker 10 changes from a turned-on state to a turned-off state, the bending portion 120 is bent by 90 degrees.

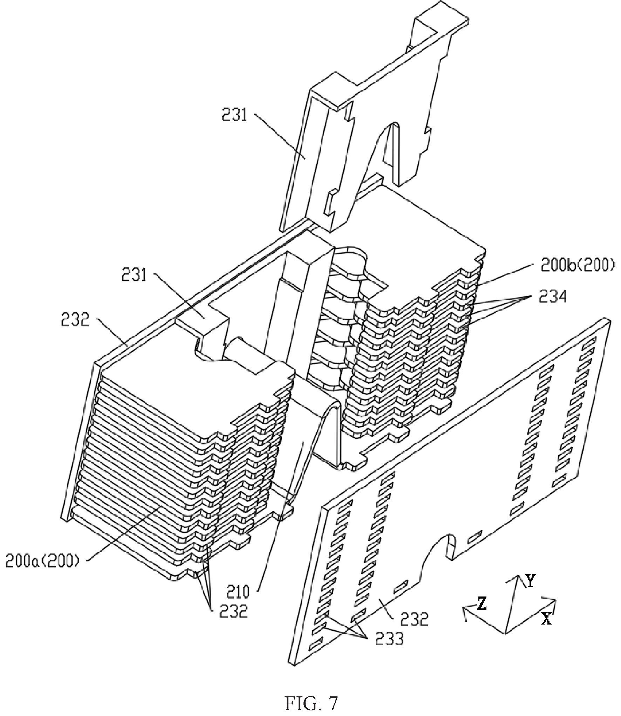

Refer to FIG. 7. In an implementation, the circuit breaker 10 further includes two arc-shaped convex part fasteners 231. The two arc-shaped convex part fasteners 231 are arranged in a third direction Z, and are respectively configured to fasten two ends of the arc-shaped convex part 210 in the third direction Z. The third direction Z is perpendicular to the first direction X and the second direction Y.

Refer to FIG. 7. In an implementation, the circuit breaker 10 further includes two arc-extinguishing gate plate fasteners 232, and the two arc-extinguishing gate plate fasteners 232 are arranged in the third direction Z. The arc-extinguishing gate plate fastener 232 is provided with a plurality of holes 233 that penetrate the arc-extinguishing gate plate fastener 232 in the third direction Z. Convex parts 234 are disposed at two ends of each arc-extinguishing gate plate in the third direction Z. The convex part 234 is inserted into the hole 233 to fasten the arc-extinguishing gate plate. The arc-extinguishing gate plates in the two arc-extinguishing gate plate groups 200 may be fastened to a same arc-extinguishing gate plate fastener 232.

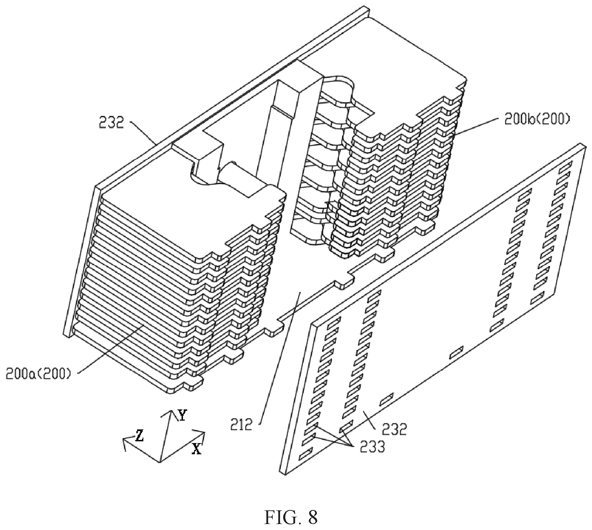

Refer to FIG. 8. In an implementation, the one arc-extinguishing gate plate and the one arc-extinguishing gate plate in the two arc-extinguishing gate plate groups 200 may alternatively be connected via a flat plate 212. To be specific, the two arc-extinguishing gate plates that are respectively in the two arc-extinguishing gate plate groups 200 and that are farthest away from the through-current busbar 100 are connected via the flat plate 212, and the flat plate 212 and the two arc-extinguishing gate plates that are respectively in the two arc-extinguishing gate plate groups 200 and that are farthest away from the through-current busbar 100 are disposed on a same plane.

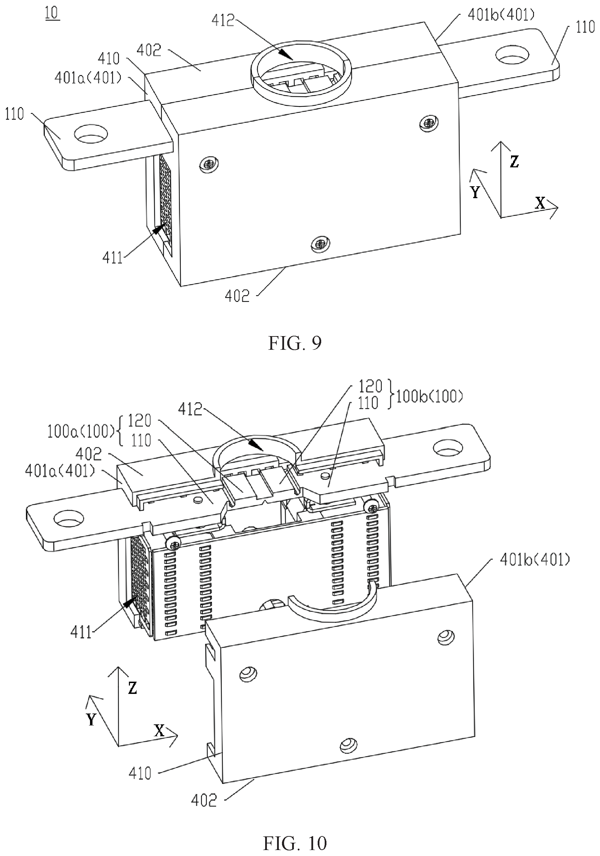

Refer to FIG. 9 and FIG. 10. In an implementation, the circuit breaker 10 further includes an arc-extinguishing chamber housing 410. The two arc-extinguishing gate plate groups 200 and at least a part of the two through-current busbars 100 are accommodated in the arc-extinguishing chamber housing 410 (with reference to FIG. 4 and FIG. 5). The arc-extinguishing chamber housing 410 includes two side panels 401 disposed opposite to each other in the first direction X, and the side panel 401 includes a through hole 411 that penetrates the side panel 401 in the first direction. The arc-extinguishing gate plate is parallel to the first direction X, the plurality of arc-extinguishing gate plates are spaced from each other in the second direction Y, and the through hole 411 communicates with a gap between two adjacent arc-extinguishing gate plates in the arc-extinguishing gate plate group 200.

The two bending portions 120 of the two through-current busbars 100 are located in the arc-extinguishing chamber housing 410. A part of the two conducting portions 110 of the two through-current busbars 100 is located in the arc-extinguishing chamber housing 410, and the other part extends through the two side panels 401 to the outside of the arc-extinguishing chamber housing 410. The two arc-extinguishing gate plate groups 200, the two arc guiding plates 220, and the arc-shaped convex part 210 are all located in the arc-extinguishing chamber housing 410. The two side panels 401 are respectively denoted as a side panel 401a and a side panel 401b. In the first direction X, the side panel 401a, the arc-extinguishing gate plate group 200a, the arc-extinguishing gate plate group 200b, and the side panel 401b are sequentially arranged.

In this embodiment of this application, both the side panel 401a and the side panel 401b include the through hole 411. When the circuit breaker 10 is turned off, high-temperature and high-voltage gas generated by the arc may flow to the side panel 401a through the gap between two adjacent arc-extinguishing gate plates in the arc-extinguishing gate plate group 200a, and be discharged from the through hole 411 on the side panel 401a to the outside of the arc-extinguishing chamber housing 410. Similarly, the high-temperature and high-voltage gas generated by the arc may alternatively flow to the side panel 401b through the gap between two adjacent arc-extinguishing gate plates in the arc-extinguishing gate plate group 200b, and be discharged from the through hole 411 on the side panel 401b to the outside of the arc-extinguishing chamber housing 410. When a fault current is disconnected, arrangement of the through hole 411 helps the arc quickly enter the arc-extinguishing gate plate group 200 and cool a high-temperature airflow generated by the arc.

In an implementation, the arc-extinguishing chamber housing 410 includes two sub-housings connected in the third direction Z. The two detachable sub-housings are disposed to facilitate assembly and disassembly of the circuit breaker 10.

Refer to FIG. 4 and FIG. 9. In an implementation, the arc-extinguishing chamber housing 410 further includes a top plate 402 and a bottom plate 403 that are disposed opposite to each other in the second direction. In the second direction Y, the top plate 402, the two through-current busbars 100, the two arc-extinguishing gate plate groups 200, and the bottom plate 403 are sequentially arranged. In the second direction Y, a distance between the through-current busbar 100 and the top plate 402 is less than a distance between the through-current busbar 100 and the bottom plate 403. An arc-extinguishing chamber is formed between the through-current busbar 100 and the bottom plate 403. When the circuit breaker 10 is turned off, the bending portions 120 all located in the arc-extinguishing chamber, and the arc formed when the bending portions 120 are disconnected is extinguished by the two arc-extinguishing gate plate groups 200 in the arc-extinguishing chamber.

Refer to FIG. 4 and FIG. 9. The top plate 402 is further provided with a mounting hole 412, and the mounting hole 410 penetrates the top plate 402 in the second direction Y. The circuit breaker 10 further includes an ignition chamber housing 420, and the ignition chamber housing 420 is fastened to the top plate 402 in the second direction Y. The ignition element and a part of the piston 300 are located in the ignition chamber housing 420, and the other part of the piston 300 extends into the arc-extinguishing chamber housing 410 from the mounting hole 410. In this application, the circuit breaker 10 includes the arc-extinguishing chamber housing 410 and the ignition chamber housing 420 that are detachably connected, to facilitate assembly of the circuit breaker 10 and recycling of each component.

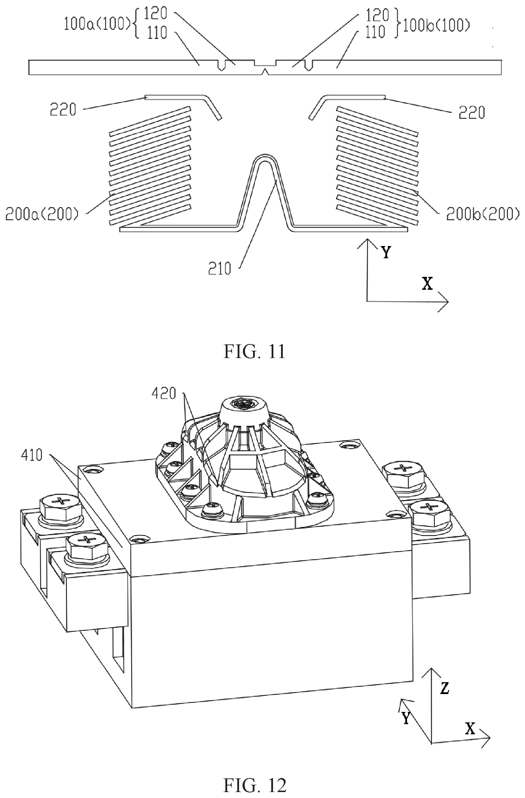

Refer to FIG. 11. In an implementation, the arc-extinguishing gate plate intersects the first direction, and the plurality of arc-extinguishing gate plates are spaced from each other in a direction perpendicular to the arc-extinguishing gate plate. In the arc-extinguishing gate plate group 200a, in a direction from the side panel 401a to the side panel 401b in the first direction X, a distance between the arc-extinguishing gate plate and the through-current busbar 100a gradually decreases in the second direction Y. Similarly, in the arc-extinguishing gate plate group 200b, in a direction from the side panel 401b to the side panel 401a in the first direction X, a distance between the arc-extinguishing gate plate and the through-current busbar 100b gradually decreases in the second direction Y. The arc-extinguishing gate plate is disposed obliquely, to facilitate discharge of the high-temperature airflow generated by the arc.

Refer to FIG. 12 and FIG. 4. In an implementation, the circuit breaker 10 includes a plurality of arc-extinguishing chamber housings 410 connected in the third direction Z. Two through-current busbars 100 and two arc-extinguishing gate plate groups 200 are accommodated in each arc-extinguishing chamber housing 410. The third direction Z is perpendicular to the first direction X and the second direction Y. The circuit breaker 10 is a multi-level circuit breaker, and levels of the multi-level circuit breaker are isolated from each other via the arc-extinguishing chamber housing 410. This improves isolation between the multi-level circuit breakers.

The plurality of arc-extinguishing chamber housings 410 may be of an integrated structure, to enhance overall strength of the plurality of arc-extinguishing chamber housings 410. The arc-extinguishing chamber housing 410 includes a front plate and a rear plate that are disposed opposite to each other in the third direction Z. Two adjacent arc-extinguishing chamber housings 410 may further share a same front plate or rear plate, to reduce the size of the circuit breaker 10 in the third direction Z and reduce costs.

Refer to FIG. 12 and FIG. 4. In an implementation, the circuit breaker 10 includes a plurality of ignition chamber housings 420 connected in the third direction Z. The plurality of ignition chamber housings 420 are respectively fastened to the plurality of arc-extinguishing chamber housings 410. An ignition element and a piston 300 are accommodated in each ignition chamber housing 420. In the circuit breaker 10, each level of circuit breaker 10 is disposed independently, and can independently control disconnection of different lines. The plurality of ignition chamber housings 420 may be of an integrated structure to enhance overall strength of the plurality of ignition chamber housings 420. The ignition chamber housing 420 includes a front plate and a rear plate that are disposed opposite to each other in the third direction Z. Two adjacent ignition chamber housings 420 may further share a same front plate or rear plate, to reduce the size of the circuit breaker 10 in the third direction Z and reduce costs.

In an implementation, the plurality of ignition chamber housings 420 communicate in the third direction Z, only one ignition element and one piston 300 are disposed in each of the plurality of ignition chamber housings 420, and the ignition element and the piston 300 are located in each of the plurality of ignition chamber housings 420. When receiving an ignition signal, the ignition element may generate a driving force for pushing the piston 300. The piston 300 moves in the second direction Y, to simultaneously disconnect two through-current busbars 100 in different arc-extinguishing chamber housings 410. This also helps control disconnection of a plurality of lines via the circuit breaker 10.

The foregoing describes in detail the circuit breaker, the photovoltaic inverter system, and the electric vehicle provided in embodiments of this application. Specific examples are used in this specification to describe principles and embodiments of this application. The descriptions of the foregoing embodiments are merely used to help understand the method and core ideas of this application. In addition, a person of ordinary skill in the art may make modifications to the specific embodiments and the application scope based on the idea of this application. In conclusion, the content of this specification shall not be construed as a limitation on this application.

## Claims

1. A circuit breaker, wherein the circuit breaker comprises:
two through-current busbars, wherein the two through-current busbars are arranged in a first direction; and
two arc-extinguishing gate plate groups, wherein the two arc-extinguishing gate plate groups are spaced from each other in the first direction, the two arc-extinguishing gate plate groups and the two through-current rows are respectively arranged in a second direction, the second direction is perpendicular to the first direction, each arc-extinguishing gate plate group comprises a plurality of arc-extinguishing gate plates, each arc-extinguishing gate plate group comprises one arc-extinguishing gate plate, a distance between the one arc-extinguishing gate plate and the through-current busbar is a maximum distance between the arc-extinguishing gate plate group and the through-current busbar in the second direction, and the one arc-extinguishing gate plate in one of the arc-extinguishing gate plate groups is connected to the one arc-extinguishing gate plate in the other arc-extinguishing gate plate group; and
when the circuit breaker is turned on, the two through-current busbars are connected, or when the circuit breaker is turned off, end parts that are respectively of the two through-current busbars and that are close to each other in the first direction are bent toward the two arc-extinguishing gate plate groups respectively, to disconnect the two through-current busbars and form an arc, and the two arc-extinguishing gate plate groups are configured to extinguish the arc.

2. The circuit breaker according to claim 1, wherein the circuit breaker further comprises an arc-shaped convex part, and the arc-shaped convex part is configured to connect to the one arc-extinguishing gate plate in each of the two arc-extinguishing gate plate groups; and
in the first direction, a projection of the arc-shaped convex part and projections of the two arc-extinguishing gate plate groups at least partially overlap, and in the second direction, a distance between the arc-shaped convex part and the through-current busbar is less than the distance between the one arc-extinguishing gate plate and the through-current busbar.

3. The circuit breaker according to claim 2, wherein when the circuit breaker is turned off, a distance between the end part and the arc-shaped convex part is greater than or equal to half of a distance between the two end parts, and is less than or equal to twice the distance between the two end parts.

4. The circuit breaker according to claim **1,** wherein each through-current busbar comprises a conducting portion and a bending portion that are connected, the two bending portions of the two through-current busbars are located between the two conducting portions, and the end part is an end that is of the bending portion and that is away from the conducting portion; and
when the circuit breaker is turned on, in the second direction, a thickness of a joint between the two bending portions is less than a thickness of the bending portion, and a thickness of a joint between the bending portion and the conducting portion is less than a thickness of the conducting portion; or when the circuit breaker is turned off, the bending portion is bent relative to the conducting portion, to separate the end parts of the two bending portions from each other.

5. The circuit breaker according to claim 4, wherein in the first direction, a distance between the two conducting portions is less than or equal to a distance between the two arc-extinguishing gate plate groups; and
when the circuit breaker is turned on, in the first direction, a sum of lengths of the two bending portions is greater than or equal to the distance between the two conducting portions.

6. The circuit breaker according to claim 4, wherein the circuit breaker further comprises two arc guiding plates, the two arc guiding plates are arranged in the first direction, and the two arc guiding plates are respectively located between one of the through-current busbars and one of the arc-extinguishing gate plate groups, and between the other one of the through-current busbars and the other one of the arc-extinguishing gate plate groups; and
the two arc guiding plates are respectively connected to the two conducting portions, and when the circuit breaker is turned off, the two end parts respectively abut against ends that are respectively of the two arc guiding plates and that are close to each other.

7. The circuit breaker according to claim 6, wherein each of the two arc guiding plate comprises a main body part and an arc guiding segment that are connected and intersect, the respective two arc guiding segments of the two arc guiding plates are located between the respective two main body parts of the two arc guiding plates, the main body part is connected to the conducting portion, and the arc guiding segment is bent from the main body part toward a direction away from the through-current busbar; and
a distance between the main body part and the conducting portion in the second direction is less than a length of the bending portion, and when the circuit breaker is turned off, the end part of the bending portion abuts against the arc guiding segment.

8. The circuit breaker according to claim 7, wherein in the first direction, a projection of the arc guiding segment and a projection of the arc-extinguishing gate plate group at least partially overlap; and
when the circuit breaker is turned off, in the first direction, the projection of the arc guiding segment and a projection of the bending portion at least partially overlap, and the projection of the arc-extinguishing gate plate group and the projection of the bending portion at least partially overlap.

9. The circuit breaker according to claim 4, wherein the circuit breaker further comprises an ignition element and a piston, and the ignition element, the piston, the two through-current busbars, and the two arc-extinguishing gate plate groups are arranged in the second direction; and
the ignition element is configured to generate a driving force driving the piston to move in the second direction, and the piston is configured to move in the second direction to disconnect the two through-current busbars to turn off the circuit breaker.

10. The circuit breaker according to claim 9, wherein in the first direction, a width of the piston is less than or equal to a distance between the two conducting portions; and
when the circuit breaker is turned off, at least a part of the piston is located between the two bending portions in the first direction.

11. The circuit breaker according to claim 1, wherein the circuit breaker further comprises an arc-extinguishing chamber housing, the two arc-extinguishing gate plate groups and at least a part of the two through-current busbars are accommodated in the arc-extinguishing chamber housing, the arc-extinguishing chamber housing comprises two side panels disposed opposite to each other in the first direction, and the side panel comprises a through hole that penetrates the side panel in the first direction; and
the arc-extinguishing gate plate is parallel to the first direction, the plurality of arc-extinguishing gate plates are spaced from each other in the second direction, or the arc-extinguishing gate plate intersects the first direction, the plurality of arc-extinguishing gate plates are spaced from each other in a direction perpendicular to the arc-extinguishing gate plate, and the through hole communicates with a gap between two adjacent arc-extinguishing gate plates in the arc-extinguishing gate plate group.

12. A power converter, wherein a direct current input end of the power converter is configured to connect to a photovoltaic module or an energy storage battery, and an alternating current output end of the power converter is configured to connect to a power grid or a load;
the power converter comprises a DC/AC conversion circuit and the circuit breaker according to any one of claims 1 to 11, wherein the circuit breaker is connected between the direct current input end and the DC/AC conversion circuit, or the circuit breaker is connected between the DC/AC conversion circuit and the alternating current output end; and
when a current flowing through two through-current busbars of the circuit breaker is greater than a preset threshold, the two through-current busbars are disconnected.

13. An energy storage system, wherein the energy storage system comprises a plurality of battery packs connected in series and the circuit breaker according to any one of claims 1 to 11, and the circuit breaker is connected to a series loop of the plurality of battery packs; and
when a current flowing through two through-current busbars of the circuit breaker is greater than a preset threshold, the two through-current busbars are disconnected.

14. An electric vehicle, comprising a battery cluster, an inverter circuit, a motor, and the circuit breaker according to any one of claims 1 to 11, wherein the battery cluster is configured to output a direct current, and the inverter circuit converts the direct current into a three-phase alternating current and transmits the three-phase alternating current to the motor;
the circuit breaker is connected between the battery cluster and a direct current terminal of the inverter circuit, or the circuit breaker is connected between an alternating current terminal of the inverter circuit and the motor; and
when a current flowing through two through-current busbars of the circuit breaker is greater than a preset threshold, the two through-current busbars are disconnected.
